# EUROPEAN PATENT APPLICATION

(11) **EP 4 578 693 A1**
(43) Date of publication of application: **02.07.2025**
(21) Application number: 24198946.6
(22) Date of filing: 06.09.2024
(51) Int. Cl.: B60K 35/21, B60K 35/22, B60K 35/23

(54) **METHOD AND APPARATUS FOR CONTROLLING INTERFACE**

(30) Priority: 26.12.2023 CN 202311814336
(71) Applicant: Xiaomi EV Technology Co., Ltd., 100176 Beijing (CN)
(72) Inventor: GAO, Yi, Beijing, 100176 (CN); BAO, Xiehao, Beijing, 100176 (CN); ZHANG, Xingyuan, Beijing, 100176 (CN); TU, Chuantao, Beijing, 100176 (CN)
(74) Representative: Stöckeler, Ferdinand

(57) **Abstract**

A method and apparatus for controlling an interface, a medium, a system, a steering wheel and a vehicle are provided, which belong to the field of vehicles. A method for controlling an interface includes: detecting (S11) a control signal of a steering wheel control; and generating (S12) a first control instruction in response to the control signal, where the first control instruction is configured to control an interface of a first device.

## Description

### TECHNICAL FIELD

The present invention relates to the field of vehicles, in particular to a method and apparatus for controlling an interface, a medium, a system, a steering wheel and a vehicle.

### BACKGROUND OF THE INVENTION

With the development and popularization of smart vehicles, the advancement of vehicle intelligence has been further activated. For example, many functions are rapidly integrating into the central control screens of vehicles.

### SUMMARY OF THE INVENTION

It is a problem that needs to be solved regarding how to control the central control screen. In order to solve the existing problem in the related art, a method for controlling an interface and apparatus, a medium, a system, a steering wheel and a vehicle are provided according to the present invention.

According to a first aspect of embodiments of the present invention, a method for controlling an interface is provided. The method includes: detecting a control signal of a steering wheel control; and generating a first control instruction in response to the control signal, where the first control instruction is configured to control an interface of a first device.

Optionally, the interface of the first device is an interface projected by a second device onto the first device.

Optionally, the interface of the first device is an interface displayed on the first device after an interface projected by a second device onto the first device is collapsed.

Optionally, the method further includes:
detecting a switching signal; and
generating a second control instruction in response to the switching signal, where the second control instruction is configured to switch the interface on the first device, and the interface on the first device includes an interface projected by a second device onto the first device and/or an interface displayed on the first device after the interface projected by the second device onto the first device is collapsed.

Optionally, detecting the switching signal includes at least one of:
detecting a switching signal sent by the steering wheel control, where the switching signal sent by the steering wheel control includes a switching signal sent by the steering wheel control in response to determining that the interface projected by the second device onto the first device is collapsed or expanded through the steering wheel control, or a switching signal sent in response to switching between regions of the interface in a case where there are regions on the interface of the first device;
detecting a switching signal sent by the first device, where the switching signal sent by the first device includes a switching signal sent by the first device in response to determining that the interface projected by the second device onto the first device is manually collapsed or expanded on the first device; or
detecting a switching signal sent by a speech module, where the switching signal sent by the speech module includes a switching signal sent by the speech module in response to determining that the interface projected by the second device onto the first device is collapsed or expanded.

Optionally, the steering wheel control includes at least one of a mechanical button, a slider, a scroll wheel, or a toggle switch; and
the control signal of the steering wheel control includes a control signal generated in response to determining that the steering wheel control is operated.

Optionally, the first device includes at least one of a vehicle central control screen, a rear display screen, a rear central armrest control screen, a vehicle instrument display screen, or a vehicle head-up display screen.

Optionally, the first device includes at least two of a vehicle central control screen, a rear display screen, a rear central armrest control screen, a vehicle instrument display screen, and a vehicle head-up display screen.

Optionally, determining a target control application in a case where the interface of the first device includes a plurality of to-be-controlled applications includes at least one of:
sorting the plurality of to-be-controlled applications according to a preset priority, and
determining a to-be-controlled application with a highest priority as the target control application;
configuring an application selection control in the steering wheel control, where the application selection control is configured to select the target control application from the plurality of to-be-controlled applications; or
triggering, in a case where there are a plurality of steering wheel controls, an application selection function by operating at least two steering wheel controls simultaneously, and determining, after triggering the application selection function, the target control application by selecting from the plurality of to-be-controlled applications through adjusting the steering wheel controls.

According to a second aspect of embodiments of the present invention, an apparatus for controlling an interface is provided. The method includes:
a detecting module, configured to detect a control signal of a steering wheel control; and
a generating module, configured to generate a first control instruction in response to the control signal, where the first control instruction is configured to control an interface of a first device.

Optionally, the interface of the first device is an interface projected by a second device onto the first device; optionally, the interface of the first device is an interface displayed on the first device after an interface projected by a second device onto the first device is collapsed.

Optionally, the detecting module is further configured to detect a switching signal; and the generating module is further configured to generate a second control instruction in response to the switching signal, where the second control instruction is configured to switch the interface on the first device, and the interface on the first device includes an interface projected by a second device onto the first device and/or an interface displayed on the first device after the interface projected by the second device onto the first device is collapsed.

Optionally, the detecting module is configured to detect the switching signal, including at least one of: detecting a switching signal sent by the steering wheel control, where the switching signal sent by the steering wheel control includes a switching signal sent by the steering wheel control in response to determining that the interface projected by the second device onto the first device is collapsed or expanded through the steering wheel control, or a switching signal sent in response to switching between regions of the interface in a case where there are regions on the interface of the first device; detecting a switching signal sent by the first device, where the switching signal sent by the first device includes a switching signal sent by the first device in response to determining that the interface projected by the second device onto the first device is manually collapsed or expanded on the first device; or detecting a switching signal sent by a speech module, where the switching signal sent by the speech module includes a switching signal sent by the speech module in response to determining that the interface projected by the second device onto the first device is collapsed or expanded.

Optionally, the apparatus further includes a determining module, configured to determine, in a case where the interface of the first device includes a plurality of to-be-controlled applications, a target control application by at least one of: sorting the plurality of to-be-controlled applications according to a preset priority, and determining a to-be-controlled application with a highest priority as the target control application; configuring an application selection control in the steering wheel control, where the application selection control is configured to select the target control application from the plurality of to-be-controlled applications; or triggering, in a case where there are a plurality of steering wheel controls, an application selection function by operating at least two steering wheel controls simultaneously, and determining, after triggering the application selection function, the target control application by selecting from the plurality of to-be-controlled applications through adjusting the steering wheel controls.

Optionally, the steering wheel control includes at least one of a mechanical button, a slider, a scroll wheel, or a toggle switch; and the control signal of the steering wheel control includes a control signal generated in response to determining that the steering wheel control is operated.

By using the above technical solution, the control signal of the steering wheel control can be detected, the first control instruction is generated in response to the control signal, and the first control instruction is configured to control the interface of the first device. In this way, during traveling, a driver may use the control key on the steering wheel to control the interface of the first device without operating the interface of the first device on the first device. Hence, compared with operating the interface of the first device on the first device, the method for controlling the interface according to the embodiments of the present invention is more convenient, faster, and safer, which achieves better human-vehicle interconnection and a complete human-vehicle integration.

It is to be understood that the above general description and the following detailed description are merely for example and explanatory, which does not limit the present invention.

### BRIEF DESCRIPTION OF DRAWINGS

Accompanying drawings here, which are incorporated in and constitute a part of this specification, illustrate embodiments consistent with the present invention and explain the principles of the present invention together with the specification.
FIG.1 is a flowchart of a method for controlling an interface according to an example.
FIG.2 is a flowchart of a method for controlling an interface according to another example.
FIG.3 is a flowchart of a method for controlling an interface according to another example.
FIG.4 is a schematic block diagram of an apparatus for controlling an interface according to an example.
FIG.5 is a schematic block diagram of a steering wheel according to an embodiment of the present invention.
FIG.6 is a schematic block diagram of a system for controlling an interface according to an embodiment of the present invention.
FIG.7 is a block diagram of a vehicle according to an example.
FIG.8 is a block diagram of an apparatus for controlling an interface according to an example.

### DETAILED DESCRIPTION OF THE INVENTION

Examples will be illustrated in detail here, and instances of which are represented in the accompanying drawings. When the following description refers to the accompanying drawings, the same number in the different accompanying drawings represents the same or similar elements unless otherwise indicated. The embodiments described in the following examples do not represent all possible embodiments consistent with the present invention. Rather, they are merely examples of an apparatus and method consistent with some aspects of the present invention as detailed in the appended claims.

It is to be noted that all actions of acquiring one or more signals, information or data in the present application are performed under the premise of complying with the corresponding data protection regulations and policies of the local country, and with authorization of the corresponding apparatus owner.

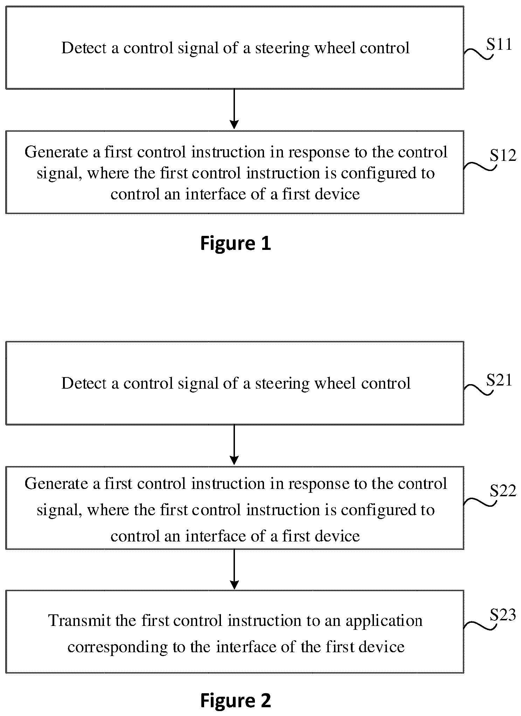

FIG.1 is a flowchart of a method for controlling an interface according to an example. The method for controlling an interface can be applied to the field of smart vehicles. As shown in FIG.1, the method for controlling an interface may include steps S11 to S12 as follows.

In step 511, a control signal of a steering wheel control is detected.

The steering wheel control refers to a control located on a steering wheel that serve a control function. The number of the steering wheel controls is at least one, generally ranging from three to four.

The steering wheel control may include at least one of a mechanical button, a slider, a scroll wheel, or a toggle switch located on the steering wheel.

The control signal of the steering wheel control includes a control signal generated in response to operating the steering wheel control.

In step S12, a first control instruction is generated in response to the control signal, where the first control instruction is configured to control an interface of a first device.

The first device may be a central control screen, a rear display screen, a rear central armrest control screen, a vehicle instrument display screen, a vehicle head-up display screen and the like on a vehicle.

By using the above technical solution, the control signal of the steering wheel control can be detected, the first control instruction is generated in response to the control signal, where the first control instruction is configured to control the interface of the first device. In this way, during traveling, a driver can use the control on the steering wheel to control the interface of the first device, rather than operating the interface of the first device on the first device. Hence, compared with operating the interface of the first device on the first device, the method for controlling the interface according to this embodiment of the present invention is more convenient, faster, and safer, which achieves better human-vehicle interconnection and a complete human-vehicle integration.

In some embodiments, the interface of the first device may be an interface projected by a second device on the first device. The second device may be a mobile phone, a tablet computer, or other electronic devices with a screen projecting function. In this way, during traveling, the interface of the second device can be projected onto the first device, enabling the driver to use the control on the steering wheel to control a screen projection interface on the first device, rather than operating an interface of the second device on the second device. Hence, compared with operating the interface of the second device on the second device, the method for controlling the interface according to these embodiments of the present invention is more convenient, faster, and safer, which achieves better human-vehicle interconnection and a complete human-vehicle integration.

In some examples, the interface of the first device is an interface displayed on the first device after an interface projected by a second device on the first device is collapsed. For example, in a case where the second device previously performed screen projection onto the first device, after the interface projected by the second device on the first device is collapsed, the interface on the first device is an interface of an application of the first device itself. In this way, during traveling, after the interface projected by the second device onto the first device is collapsed, the driver can use the control on the steering wheel to control the interface of the application of the first device itself, rather than operating the interface of the application of the first device itself on the first device. Compared with operating the interface of the application of the first device itself on the first device, the method for controlling the interface according to embodiments of the present invention is more convenient, faster, and safer, which achieves better human-vehicle interconnection and a complete human-vehicle integration.

In some examples, the first device may include at least one of a central control screen, a rear display screen, a rear central armrest control screen, a vehicle instrument display screen or a vehicle head-up display screen on the vehicle.

For example, for the rear display screen and the rear central armrest control screen, when there is a child sitting in a rear row of the vehicle, the driver may project a mobile phone screen onto the rear display screen or the rear central armrest control screen to play audio, video, games, and the like for the child. The driver may control whether to stop playing, adjust the playback content, adjust the playback process and the like via the steering wheel control.

In this way, during traveling, the driver may use the control on the steering wheel to control the interface of the first device, rather than operating the interface of the first device on the first device. Compared with operating the interface of the application of the first device itself on the first device, the method for controlling the interface according to embodiments of the present invention is more convenient, faster, and safer, which achieves better human-vehicle interconnection and a complete human-vehicle integration.

In some examples, the first device may include at least two of the central control screen, the rear display screen, the rear central armrest control screen, the vehicle instrument display screen or the vehicle head-up display screen on the vehicle.

For example, the mobile phone interface may be projected onto both the central control screen of the vehicle and the rear display screen of the vehicle, so that the same interface can be seen from both the front and rear rows at the same time. For example, during a long-distance trip, in a case where the front and rear passengers would like to watch the same video together, the mobile phone screen may be simultaneously projected onto the central control screen and the rear display screen, enabling the front and rear passengers to watch it together. Additionally, in a case where the mobile phone screen is simultaneously projected onto a plurality of screens on the vehicle, the plurality of screen projection interfaces may be controlled together via the steering wheel control. For example, the video playback progress, volume, and the like may be simultaneously controlled via the steering wheel control while watching a video.

FIG.2 is a flowchart of a method for controlling an interface according to another example. As shown in FIG.2, the method for controlling an interface includes steps S21 to S23 as follows .

In step S21, a control signal of a steering wheel control is detected.

The number of the steering wheel control is at least one, generally three to four.

The steering wheel control may include at least one of physical controls such as a mechanical button, a slider, a scroll wheel, or a toggle switch located on the steering wheel. These physical controls generate specific control signals. These control signals are received by an underlying layer, for example, these control signals are received by underlying physical wiring and transmitted to a framework layer of an operating system (such as an Android system) of the vehicle through the underlying layer (such as the underlying physical wiring). In this way, the control signal of the steering wheel control is detected on the framework layer.

In step S22, a first control instruction is generated in response to the control signal, where the first control instruction is configured to control an interface of a first device.

The first device may be a central control screen, a rear display screen, a rear central armrest control screen, a vehicle instrument display screen, a vehicle head-up display screen and the like on a vehicle. For example, the first device may be at least one of these display screens.

In addition, the first control instruction may be generated in response to the control signal on the framework layer.

In step S23, the first control instruction is transmitted to an application corresponding to the interface of the first device.

For example, the framework layer transmits the first control instruction to the application corresponding to the interface of the first device. For example, in a case where the application corresponding to the interface of the first device is a video player, the framework layer transmits the first control instruction to the video player. In this way, the application corresponding to the interface of the first device may update the interface of the first device based on the first control instruction. For example, in a case where the application corresponding to the interface of the first device is the video player, the video player updates the interface of the first device based on the first control instruction. For example, in a case where the first control instruction is a volume adjustment instruction, the video player updates the volume of the interface of the first device based on the first control instruction.

By using the above technical solution, the control signal of the steering wheel control can be detected. The first control instruction is generated in response to the control signal, where the first control instruction is configured to control the interface of the first device. In this way, during traveling, the driver may use the control on the steering wheel to control the interface of the first device, rather than operating the interface of the first device on the first device. Compared with operating the interface of the first device on the first device, the method for controlling the interface according to the embodiments of the present invention is more convenient, faster, and safer, which achieves better human-vehicle interconnection and a complete human-vehicle integration.

In some examples, the second device may project an interface of a second device onto the interface of the first device using at least one of the following modes.

For example, when the second device is playing a video, the interface of the second device may be projected onto the interface of the first device through a screen projection function of the video player playing the video. For example, in the video player, the screen projection function is selected, and the corresponding vehicle is selected as the screen projection device. As a result, the interface of the second device may be projected onto the first device of the corresponding vehicle.

For another example, when the second device is playing audio, the audio may be streamed to the vehicle for playback through an interconnection and communication platform, where the playback status on the second device is synchronized with the first device in real-time to project the interface of the second device to the first device. The interconnection and communication platform refers to a platform that can achieve the connection and communication between the second device and the vehicle.

For example, the second device and the vehicle may be connected to the same interconnection and communication platform, through which the connection and communication between the second device and the vehicle can be achieved. In this way, music, applications, screens and the like can be streamed between the second device and the vehicle. In a case where the second device is playing music, the audio being played on the second device can be streamed to the vehicle for playback by dragging the music being played to the icon corresponding to the vehicle on the interconnection and communication platform, with the playback status on the second device synchronized in real-time with the vehicle. Additionally, the steering wheel control can be used to control the music playback on the second device, such as play, pause, previous track, next track, and progress control and the like, while the second device can also control the playing volume of vehicle.

For another example, in a case where the second device has established a connection with the vehicle and a handoff application has been installed on the vehicle, in response to determining that the handoff application is launched on the second device, the interface of the second device is projected onto the first device by operating an icon of the handoff application on the first device, where the handoff application refers to an application already installed on both the second device and the vehicle. The case where the second device has established the connection with the vehicle indicates that a communication connection has been established between the second device and the vehicle, e.g., the second device and the vehicle can send messages to each other.

For example, in a case where a video player is installed on the second device and a video player is also installed on the vehicle, the video player is referred as to the handoff application. In a case where the video player is launched on the second device, handoff may be completed by clicking an icon of the video player on the first device of the vehicle. In this way, the video player is launched on the first device of the vehicle and switched to an application page being browsed by the second device, enabling the screen projection from the second device to the first device.

For another example, in a case where the second device has established the connection with the vehicle, the interface of the second device is projected onto the first device by screen mirroring via the interconnection and communication platform.

For example, the second device and the vehicle may be connected to the same interconnection and communication platform. The interface of the second device is dragged to the icon of the vehicle on the interconnection and communication platform to complete mirroring screen projection of the interface of the second device to the first device on the vehicle. In this way, synchronization between the second device and the vehicle is achieved. The mirrored screen interface can be controlled through the steering wheel control.

For another example, in a case where the second device has established the connection with the vehicle, but the handoff application is not installed on the vehicle, the interface of the handoff application on the second device may be projected to the first device through the interconnection and communication platform. This screen projection mode may also be referred as to secondary screen projection.

For example, the second device and the vehicle may be connected to the same interconnection and communication platform. A to-be-projected application A (yet the to-be-projected application A is not installed on the vehicle) is opened on the second device, a thumbnail of the to-be-projected application A is dragged from the second device to the interconnection and communication platform to complete the screen projection of the to-be-projected application A to the first device of the vehicle, displaying a page (which can interact normally) of the to-be-projected application A on the first device of the vehicle. Additionally, in a case where the to-be-projected application A is collapsed to the background on the second device afterward, the second device can continue to be used normally without affecting the to-be-projected application A projected on the vehicle end, unless the process of the to-be-projected application A is ended on the second device or the second device regains control of to-be-projected application A through a recent task.

By using the various screen projection modes above, the interface of the second device can be projected onto the first device of the vehicle.

In some examples, the method for controlling the interface according to the embodiments of the present invention may further include: detecting a switching signal; and generating a second control instruction in response to the switching signal, where the second control instruction is configured to switch the interface on the first device. The interface on the first device includes an interface projected by a second device on the first device and/or an interface displayed on the first device after the interface projected by the second device on the first device is collapsed.

Detecting the switching signal may be implemented by at least one of the following modes.

The first detecting mode is to detect a switching signal sent by the steering wheel control, where the switching signal sent by the steering wheel control includes a switching signal sent by the steering wheel control in response to determining that the interface projected by the second device on the first device is collapsed or expanded through the steering wheel control, or a switching signal sent in response to switching between regions of the interface in a case where there are regions on the interface of the first device.

For example, in a case that the user operates a function switching control in the steering wheel control to make the steering wheel control to switch from controlling the interface projected by the second device on the first device to controlling the interface of the first device itself, the subsequent control signals of the steering wheel control will be interpreted by the framework layer as controlling the interface of the first device itself.

The second detecting mode is to detect a switching signal sent by the first device, where the switching signal sent by the first device includes a switching signal sent by the first device in response to determining that the interface projected by the second device onto the first device is manually collapsed or expanded on the first device.

For example, the user may manually expand and collapse the screen projection interface of the second device projected onto the first device. Or the screen projection interface may be automatically expanded and collapsed within a preset time. In response to determining that the screen projection interface changes from an expanded status to a collapsed status, the steering wheel control controls the interface of the first device itself by default. In response to determining that the screen projection interface changes from the collapsed state to the expanded state, the steering wheel control controls the interface projected by the second device onto the first device by default.

The third detecting mode is to detect a switching signal sent by a speech module, where the switching signal sent by the speech module includes a switching signal sent in response to determining that the interface projected by the second device on the first device is collapsed or expanded through the speech module.

For example, the user may select whether the steering wheel control controls the interface of the first device itself or the interface projected by the second device onto the first device through intelligent speech in the vehicle.

In addition, the above switching signal may be transmitted to the framework layer, so that the framework layer can know whether the steering wheel control currently controls the interface projected by the second device onto the first device or controls the interface of the first device itself. For example, configuration may include as follows. In a case where a signal value of the switching signal is 0, it indicates that the control of the steering wheel control on the interface projected by the second device onto the first device is turned off. In other words, the steering wheel control is used to control the interface of the first device itself. In a case where the signal value of the switching signal is 1, it indicates that the control of the steering wheel control on the interface projected by the second device onto the first device is turned on. In a case where there are a plurality of regions on the interface of the first device, different signal values may be configured to represent the selection of different areas on the interface of the first device. Once receiving the switching signal, the framework layer may determine, according to the signal value of the switching signal, whether to use the steering wheel control to control the interface projected by the second device onto the first device or use the steering wheel control to control the interface of the first device itself, as well as use the steering wheel control to control which region on the interface, etc.

By using the above technical solution, the interface (such as the interface projected by the second device onto the first device or the interface of the first device itself) controlled by the steering wheel control can be switched, which solves a conflicting problem when the steering wheel control controls the interfaces of the plurality of devices.

In some examples, a single control or a combination of controls in the steering wheel control may be used to represent different control signals. Some commonly used types of applications (APPs) and frequently used steering wheel controls (such as a mechanical button, a scroll wheel, a slider, and a toggle switch, etc.) are provided as examples.

1. A short video interface: left and right controls (e.g., left and right buttons) are used to indicate left-right switching of the interface; an up control (e.g., up button) is used to indicate a previous short video; a down control (e.g., down button) is used to indicate a next short video; an OK control (e.g., OK button) is used to indicate a Back operation, i.e., the short video interface exits the full screen video playback interface and returns to the video list interface; a scroll wheel is used to adjust the volume by scrolling the scroll wheel; "Left button + scroll wheel" is used to adjust the brightness; and "Right button + scroll wheel" is used to adjust a video speed, etc. Additional functionality can be achieved through button combinations.

2. Communication Apps (e.g., WeChat): when in a non-chat interface, the left and right button s are used for left-right switching of the interface, and up and down buttons are used for an operation of scrolling up and down once; when a call comes, clicking the OK button once to answer the call, double-clicking the OK button to hang up; and when there is no incoming call, clicking the OK button once to return; and when in a chat interface, the left button is used to input speech, the right key is used to send messages, the scroll wheel is used to scroll up and down, the OK button is used to return, etc. Additional functionality can be achieved through button combinations.

3. Long video and other APP platforms: the left button is used to indicate rewind, the right button is used to indicate fast forward, the up button is used to indicate a previous episode, the down button is used to indicate a next episode, the scroll wheel is used to adjust the volume, the OK button is used to indicate return, the "left button + scroll wheel" is used to adjust the brightness, the "right button + scroll wheel" is used to adjust a video playback speed, etc. Additional functionality can be achieved through button combinations.

In addition, control strategies of the scroll wheel used frequently may also be defined. For example, the following control strategies may be defined: on the video page, the scroll wheel is used to adjust the volume; on other pages, the scroll wheel is used to adjust interface scrolling on the first device; a mode of combining the scroll wheel and other buttons is used to adjust the brightness, the video speed, and the like; a full rotation of the scroll wheel indicates a full screen scroll on the first device; the rotation of scroll wheel is divided into N steps based on the rotation angle; in the scrolling process of the scroll wheel, a signal related to the scroll wheel is sent, the signal value is an array containing the scrolling direction and step; every m steps is converted into one event in the framework layer, with each event scrolling according to 1/m of the interface on the first device.

By using the above technical solution, the single control or the combination of controls in the steering wheel control can be used to represent different control signals. In this way, during traveling, the driver may use the control on the steering wheel to control the interface of the first device, rather than operating the interface of the first device on the first device. Compared with operating the interface of the first device on the first device, the method for controlling the interface according to the embodiments of the present invention is more convenient, faster, and safer, which achieves better human-vehicle interconnection and a complete human-vehicle integration.

In some examples, the method for controlling the interface according to the examples of the present invention may further include: receiving a correspondence relationship between the steering wheel control and the control signal set by the user. In other words, the user may customize the control signal of the steering wheel control to better adapt to the preference of the user.

In some examples, the interface of the first device includes a plurality of to-be-controlled applications. In this case, the method for controlling the interface according to the example of the present invention may determine a target control application through at least one of the following modes.

The first mode is to sort the plurality of to-be-controlled applications according to a preset priority, and determine the to-be-controlled application with the highest priority as the target control application.

For example, in terms of a scenario priority, foreground applications take priority over background demands, and local applications take priority over remote applications. In other words, in a case where there is a foreground application, its demands is prioritized. In a case where there is no foreground application, the background demands are processed. The demands of the local applications are prioritized between the local applications and the remote applications.

The second mode is to configure an application selection control in the steering wheel control, where the application selection control is configured to select the target control application from the plurality of to-be-controlled applications.

The third mode is to trigger, in a case where there are a plurality of the steering wheel controls, an application selection function by operating the at least two steering wheel controls simultaneously and determine the target control application by selecting from the plurality of to-be-controlled applications through adjusting the steering wheel controls, after the application selection function is triggered.

By using the above technical solution, the target control application can be determined in the case where there are the plurality of to-be-controlled applications contained in the interface of the first device, ensuring to meet the demands of the target control application preferentially when processing the control signal of the steering wheel control, thereby improving the user experience.

In some examples, the steering wheel control has a default function in a case where the second device does not project the interface of the first device to the first device. For example, in a case where the interface of the first device itself is not on certain special pages, the left and right controls and the scroll wheel of the steering wheel control have the function of adjusting media sounds in a normal mode. In a case where the interface of the first device itself is on certain special pages, such as a rearview mirror adjustment page, the steering wheel control has a function of adjusting a rearview mirror.

In addition, the framework layer may perform processing according to the different modes of the interface of the first device itself. Three commonly used statuses are provided below as an example.

1. Telephone mode: an Internet phone application needs to actively declare its status. In the telephone mode, the control signal of the steering wheel control is converted by the framework layer into the corresponding first control instruction, and the framework layer transmits the corresponding first control instruction to the telephone application to respond to telephone operation demands of the user.

2. Application interception mode: the application needs to actively declare itself and only takes effect on a front page. The framework layer converts the control signal of the steering wheel control into the corresponding first control instruction and transmits the corresponding first control instruction to an application layer. The application layer intercepts the corresponding first control instruction and make corresponding processing to update the relevant page on the first device. In this mode, after the control signal of the steering wheel control is converted into the corresponding first control instruction, the corresponding first control instruction is transmitted to the foreground application to respond to the operation demands of the user.

3. Normal mode: this is a default mode, where the control signal of the steering wheel control is transmitted to a media service for processing. In a case where there is no media service or the control signal cannot be processed, the control signal is forwarded to the foreground application. In this mode, the control signal of the steering wheel control is transmitted to the default media application of the system to respond to media operation demands of the user.

By using the above technical solution, when the second device does not project the screen to the first device, the interface of the first device itself can be controlled by the steering wheel control.

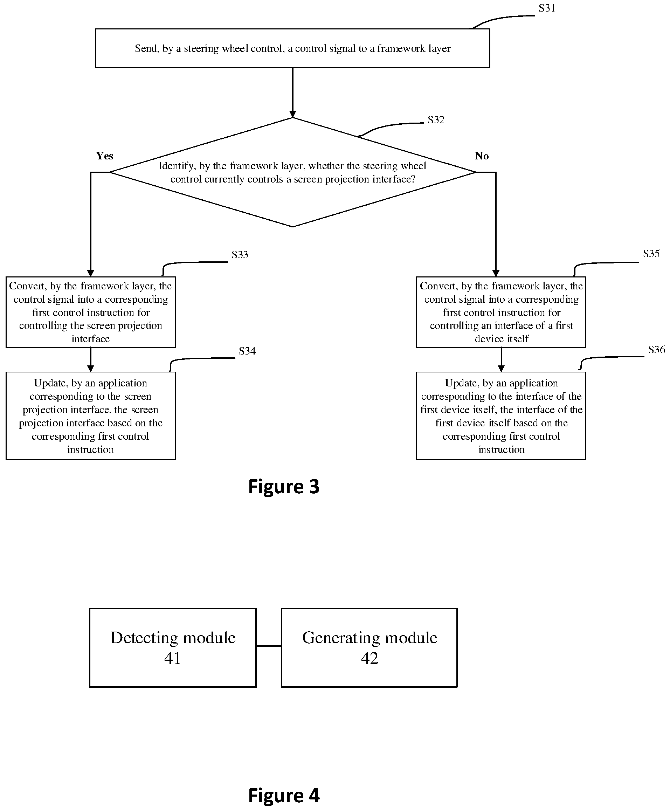

FIG.3 is a flowchart of a method for controlling an interface according to another example. As shown in FIG.3, in step S31, a steering wheel control sends a control signal to a framework layer. In step S32, the framework layer identifies whether the steering wheel control currently controls an interface projected by a second device onto a first device (which is referred to as a screen projection interface here) or controls an interface of the first device itself. In step S33, in response to determining that the framework layer identifies that the interface projected by the second device onto the first device is controlled, the framework layer converts the control signal into the corresponding first control instruction for controlling the screen projection interface. In step S34, the application corresponding to the screen projection interface updates the screen projection interface based on the corresponding first control instruction. In step S35, in response to determining that the framework layer identifies that the interface of the first device itself is controlled, the framework layer converts the control signal into the corresponding first control instruction for controlling the interface of the first device itself. The application corresponding to the interface of the first device itself updates the interface of the first device itself based on the corresponding first control instruction in step S36.

By using the above technical solution, during traveling, a driver may use the control on a steering wheel to operate the interface on the first device, which is more convenient, faster, and safer, thereby achieving better human-vehicle interconnection and a complete human-vehicle integration.

FIG.4 is a schematic block diagram of an apparatus for controlling an interface according to an example. The apparatus for controlling an interface can be applied to a scenario of smart vehicles. As shown in FIG.4, an apparatus for controlling an interface according to this embodiment of the present invention includes: a detecting module 41, configured to detect a control signal of a steering wheel control; and a generating module 42, configured to generate a first control instruction in response to the control signal, where the first control instruction is configured to control an interface of a first device.

By using the above technical solution, the control signal of the steering wheel control can be detected. The first control instruction is generated in response to the control signal, where the first control instruction is configured to control the interface of the first device. In this way, during traveling, a driver may use the control on the steering wheel to control the interface of the first device without operating the interface of the first device on the first device. Hence, compared with operating the interface of the first device on the first device, the apparatus for controlling the interface according to this embodiment of the present invention is more convenient, faster, and safer, which achieves better human-vehicle interconnection and a complete human-vehicle integration.

Optionally, the interface of the first device is an interface projected by a second device onto the first device.

Optionally, the interface of the first device is an interface displayed on the first device after an interface projected by a second device onto the first device is collapsed.

Optionally, the detecting module 41 is further configured to detect a switching signal.

The generating module 42 is further configured to generate a second control instruction in response to the switching signal, where the second control instruction is configured to switch the interface on the first device, and the interface on the first device includes an interface projected by a second device onto the first device and/or an interface displayed on the first device after the interface projected by the second device onto the first device is collapsed.

Optionally, the detecting module 41 detects the switching signal, which includes at least one of the following:
detecting a switching signal sent by the steering wheel control, where the switching signal sent by the steering wheel control includes a switching signal sent by the steering wheel control in response to determining that the interface projected by the second device onto the first device is collapsed or expanded through the steering wheel control, or a switching signal sent in response to switching between regions of the interface in a case where there are regions on the interface of the first device;
detecting a switching signal sent by the first device, where the switching signal sent by the first device includes a switching signal sent by the first device in response to determining that the interface projected by the second device onto the first device is manually collapsed or expanded on the first device; or
detecting a switching signal sent by a speech module, where the switching signal sent by the speech module includes a switching signal sent by the speech module in response to determining that the interface projected by the second device onto the first device is collapsed or expanded.

Optionally, the steering wheel control includes at least one of a mechanical button, a slider, a scroll wheel, or a toggle switch; and
the control signal of the steering wheel control includes a control signal generated in response to determining that the steering wheel control is operated.

Optionally, the first device includes at least one of a vehicle central control screen, a rear display screen, a rear central armrest control screen, a vehicle instrument display screen or a vehicle head-up display screen.

Optionally, the first device includes at least two of a vehicle central control screen, a rear display screen, a rear central armrest control screen, a vehicle instrument display screen or a vehicle head-up display screen.

Optionally, the apparatus for controlling an interface further includes a determining module. The determining module is configured to determine a target control application in a case where the interface of the first device includes a plurality of to-be-controlled applications, which includes at least one of the following modes:
sorting the plurality of to-be-controlled applications according to a preset priority, and
determining a to-be-controlled application with a highest priority as the target control application;
configuring an application selection control in the steering wheel control, where the application selection control is configured to select the target control application from the plurality of to-be-controlled applications; or
triggering, in a case where there are a plurality of steering wheel controls, an application selection function by operating at least two steering wheel controls simultaneously, and
determining, after triggering the application selection function, the target control application by selecting from the plurality of to-be-controlled applications through adjusting the steering wheel controls.

The specific implementations of the operations executed by each module in the apparatus for controlling the interface according to these embodiments of the present invention have been described in detail in the relevant methods, which will not be repeated here.

An apparatus for controlling an interface is further provided according to the present invention, where the apparatus includes:
a processor; and
a memory that stores instructions executable by the processor;
where the processor is configured to read the instructions executable by the processor to execute the method described in any one of the embodiments of the present invention.

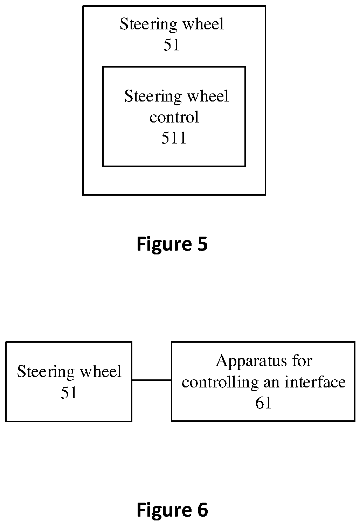

FIG.5 is a schematic block diagram of a steering wheel according to an embodiment of the present invention. As shown in FIG.5, the steering wheel 51 includes: a steering wheel control 511, configured to receive a first operation of the steering wheel control 511 by a user, and generate a control signal based on the first operation, where the control signal is configured to control an interface of a first device.

The first device may be a central control screen, a rear display screen, a rear central armrest control screen, a vehicle instrument display screen, a vehicle head-up display screen and the like on a vehicle.

By using the above technical solution, the steering wheel control can receive the first operation of the steering wheel control by a user, and generate the control signal based on the first operation, where the control signal is configured to control the interface of the first device. In this way, during traveling, a driver may use the control on the steering wheel to control the interface of the first device without operating the interface of the first device on the first device. Compared with operating the interface of the first device on the first device, the steering wheel according to this embodiment of the present invention enables the interface control to be more convenient, faster, and safer, which achieves better human-vehicle interconnection and a complete human-vehicle integration.

In some examples, the interface of the first device is an interface projected by a second device onto the first device. This has been described in detail above, which will not be repeated here.

In some examples, the interface of the first device is an interface displayed on the first device after an interface projected by a second device onto the first device is collapsed. This has been described in detail above, which will not be repeated here.

In some examples, the steering wheel control 511 is further configured to receive a second operation of the steering wheel control by the user, and generate a switching signal based on the second operation, where the switching signal is configured to switch the interface on the first device or switch between regions of the interface in a case where there are regions on the interface of the first device. The interface on the first device includes an interface projected by a second device onto the first device and/or an interface displayed on the first device after the interface projected by the second device onto the first device is collapsed. This has been described in detail above, which will not be repeated here.

In some examples, the steering wheel control 511 includes at least one of a mechanical button, a slider, a scroll wheel, or a toggle switch

In some examples, an application selection control is provided in the steering wheel control 511 and is configured to select, in a case where the interface of the first device includes a plurality of to-be-controlled applications, a target control application from the plurality of to-be-controlled applications; and
where the steering wheel control is further configured to trigger, in a case where there are a plurality of steering wheel controls, the application selection function by operating at least two steering wheel controls simultaneously, and the application selection control is further configured to determine, after being triggered, the target control application by selecting from the plurality of to-be-controlled applications through adjusting the steering wheel controls.

How to use the steering wheel control 511 to select the target control application has been described in detail above, which will not be repeated here.

FIG.6 is a schematic block diagram of a system for controlling an interface according to an embodiment of the present invention. As shown in FIG.6, the system for controlling an interface may include an apparatus 61 for controlling an interface and a steering wheel 51. The apparatus 61 for controlling an interface may be the apparatus for controlling the interface according to any one of the embodiments described above. The steering wheel 51 may be the steering wheel according to any one of the embodiments described above.

By using the system for controlling an interface according to the embodiments of the present invention, during traveling, a driver may use a control on a steering wheel to control an interface of a first device without operating the interface of the first device on the first device. Compared with operating the interface of the first device on the first device, the system for controlling the interface according to the embodiments of the present invention enables the interface control to be more convenient, faster, and safer, which achieves better human-vehicle interconnection and a complete human-vehicle integration.

A computer readable storage medium is further provided according to the present invention. The computer readable storage medium stores computer program instructions. The computer program instructions, when executed by a processor, implement steps of the method described in any embodiments of the present invention.

A vehicle is further provided according to the present invention, which includes:
the steering wheel described above; and
a processor, configured to execute the method for controlling an interface described in any embodiments of the present invention.

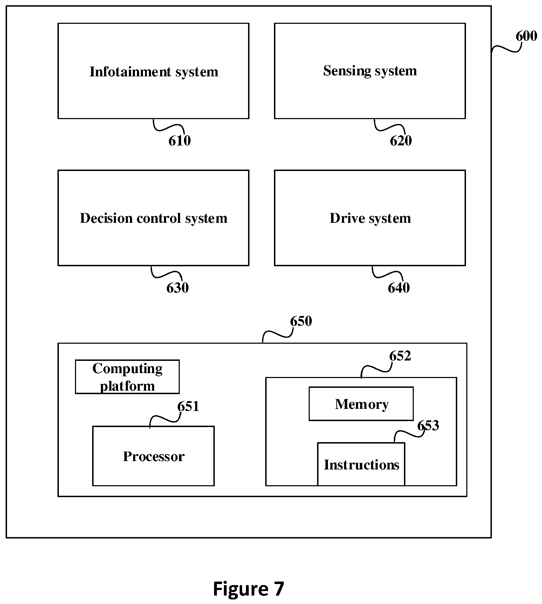

FIG.7 is a block diagram of a vehicle 600 shown according to an example. For example, a vehicle 600 may be a hybrid vehicle, and may also be a non-hybrid vehicle, an electric vehicle, a fuel cell vehicle, or other types of vehicles. The vehicle 600 may be an automatic driving vehicle, a semiautomatic driving vehicle, or a non-automatic driving vehicle.

Referring to FIG.7, the vehicle 600 may include various subsystems, such as an infotainment system 610, a sensing system 620, a decision control system 630, a drive system 640, and a computing platform 650. The vehicle 600 may further include more or fewer subsystems, and each subsystem may include a plurality of components. In addition, each of the subsystems and each of the components of the vehicle 600 may be interconnected in a wired or wireless manner.

In some examples, the infotainment system 610 may include a communication system, an entertainment system, a navigation system and the like.

The sensing system 620 may include several types of sensors for sensing information of a surrounding environment of the vehicle 600. For example, the sensing system 620 may include a global positioning system (the global positioning system may be a GPS system, a Beidou system or other positioning systems), an inertial measurement unit (IMU), a lidar, a millimeter wave radar, an ultrasonic radar and a camera shooting apparatus.

The decision control system 630 may include a computing system, a vehicle control unit, a steering system, an accelerator, and a braking system.

The drive system 640 may include components that provide power for the vehicle 600 to move. In one example, the driving system 640 may include an engine, an energy source, a transmission system, and wheels. The engine may be one or a combination of a plurality of an internal combustion engine, an electric motor, and an air compression engine. The engine can convert energy provided by the energy source into mechanical energy.

Some or all of the functions of the vehicle 600 are controlled by the computing platform 650. The computing platform 650 may include at least one processor 651 and a memory 652, and the processor 651 may execute instructions 653 stored on the memory 652.

The processor 651 may be any conventional processor, such as a commercially available CPU. The processor may further include, for example, a graphic process unit (GPU), a field programmable gate array (FPGA), a system on a chip (SOC), an application specific integrated chip (ASIC) or their combination.

The memory 652 may be implemented by any type of volatile or nonvolatile storage device or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the memory 652 may further store data such as road maps, route information, a vehicle position, direction and speed, and other data. The data stored on the memory 652 may be used by the computing platform 650.

In examples of the present invention, the processor 651 may execute the instructions 653 to complete all or part of steps of the method for controlling an interface above.

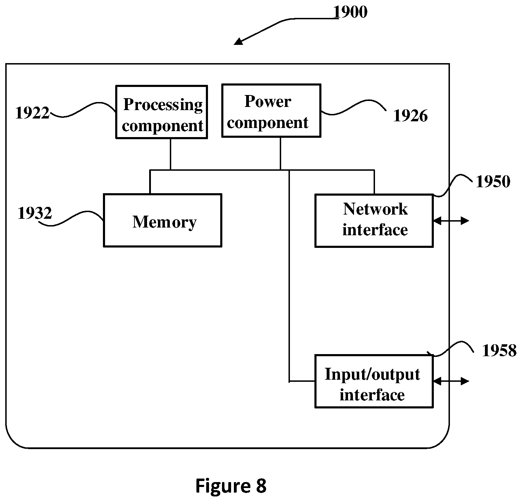

FIG.8 is a block diagram of an apparatus 1900 for controlling an interface shown according to an example. For example, the apparatus 1900 may be provided as a server. Referring to FIG.8, the apparatus 1900 includes a processing component 1922, which further includes one or more processors, and a memory resource represented by a memory 1932, for storing instructions executable by the processing component 1922, such as an application program. The application program stored on the memory 1932 may include one or more modules with each corresponding to a set of instructions. In addition, the processing component 1922 is configured to execute the instructions to execute the above method for controlling an interface.

The apparatus 1900 may further include a power component 1926 configured to implement power management of the apparatus 1900, a wired or wireless network interface 1950 configured to connect the apparatus 1900 to a network, and an input/output interface 1958. The apparatus 1900 may operate based on an operating system stored in the memory 1932.

In another example, a computer program product is further provided, including a computer program executable by a programmable apparatus. The computer program includes, when executed by the programmable apparatus, code segments for implementing the above method for controlling an interface.

## Claims

1. A method for controlling an interface, comprising:
detecting (511; S21) a control signal of a steering wheel control (511); and
generating (S12;S22) a first control instruction in response to the control signal, wherein the first control instruction is configured to control an interface of a first device.

2. The method according to claim 1, wherein the interface of the first device is an interface projected by a second device onto the first device.

3. The method according to claim 1, wherein the interface of the first device is an interface displayed on the first device after an interface projected by a second device onto the first device is collapsed.

4. The method according to claim 1, further comprising:
detecting a switching signal; and
generating a second control instruction in response to the switching signal, wherein the second control instruction is configured to switch the interface on the first device, and the interface on the first device comprises an interface projected by a second device onto the first device and/or an interface displayed on the first device after the interface projected by the second device onto the first device is collapsed.

5. The method according to claim 4, wherein detecting the switching signal comprises at least one of:
detecting a switching signal sent by the steering wheel control (511), wherein the switching signal sent by the steering wheel control (511) comprises a switching signal sent by the steering wheel control (511) in response to determining that the interface projected by the second device onto the first device is collapsed or expanded through the steering wheel control (511), or a switching signal sent in response to switching between regions of the interface in a case where there are regions on the interface of the first device;
detecting a switching signal sent by the first device, wherein the switching signal sent by the first device comprises a switching signal sent by the first device in response to determining that the interface projected by the second device onto the first device is manually collapsed or expanded on the first device; or
detecting a switching signal sent by a speech module, wherein the switching signal sent by the speech module comprises a switching signal sent by the speech module in response to determining that the interface projected by the second device onto the first device is collapsed or expanded.

6. The method according to any one of claims 1 to 5, wherein
the steering wheel control (511) comprises at least one of a mechanical button, a slider, a scroll wheel, or a toggle switch; and
the control signal of the steering wheel control (511) comprises a control signal generated in response to determining that the steering wheel control (511) is operated.

7. The method according to any one of claims 1 to 5, wherein the first device comprises at least one of a vehicle central control screen, a rear display screen, a rear central armrest control screen, a vehicle instrument display screen, or a vehicle head-up display screen.

8. The method according to any one of claims 1 to 5, wherein the first device comprises at least two of a vehicle central control screen, a rear display screen, a rear central armrest control screen, a vehicle instrument display screen, and a vehicle head-up display screen.

9. The method according to any one of claims 1 to 5, further comprising:
determining, in a case where the interface of the first device comprises a plurality of to-be-controlled applications, a target control application by at least one of:
sorting the plurality of to-be-controlled applications according to a preset priority, and determining a to-be-controlled application with a highest priority as the target control application;
configuring an application selection control in the steering wheel control (511), wherein the application selection control is configured to select the target control application from the plurality of to-be-controlled applications; or
triggering, in a case where there are a plurality of steering wheel controls (511), an application selection function by operating at least two steering wheel controls (511) simultaneously, and determining, after triggering the application selection function, the target control application by selecting from the plurality of to-be-controlled applications through adjusting the steering wheel controls (511).

10. An apparatus for controlling an interface, comprising:
a detecting module (41), configured to detect a control signal of a steering wheel control (511); and
a generating module (42), configured to generate a first control instruction in response to the control signal, wherein the first control instruction is configured to control an interface of a first device.

11. The apparatus according to claim 10, wherein the interface of the first device is an interface projected by a second device onto the first device; optionally, the interface of the first device is an interface displayed on the first device after an interface projected by a second device onto the first device is collapsed.

12. The apparatus according to claim 10, wherein
the detecting module (41) is further configured to detect a switching signal; and
the generating module (42) is further configured to generate a second control instruction in response to the switching signal, wherein the second control instruction is configured to switch the interface on the first device, and the interface on the first device comprises an interface projected by a second device onto the first device and/or an interface displayed on the first device after the interface projected by the second device onto the first device is collapsed.

13. The apparatus according to claim 12, wherein the detecting module (41) is configured to detect the switching signal, comprising at least one of:
detecting a switching signal sent by the steering wheel control (511), wherein the switching signal sent by the steering wheel control (511) comprises a switching signal sent by the steering wheel control (511) in response to determining that the interface projected by the second device onto the first device is collapsed or expanded through the steering wheel control (511), or a switching signal sent in response to switching between regions of the interface in a case where there are regions on the interface of the first device;
detecting a switching signal sent by the first device, wherein the switching signal sent by the first device comprises a switching signal sent by the first device in response to determining that the interface projected by the second device onto the first device is manually collapsed or expanded on the first device; or
detecting a switching signal sent by a speech module, wherein the switching signal sent by the speech module comprises a switching signal sent by the speech module in response to determining that the interface projected by the second device onto the first device is collapsed or expanded.

14. The apparatus according to any one of claims 10 to 13, wherein the apparatus further comprises:
a determining module, configured to determine, in a case where the interface of the first device comprises a plurality of to-be-controlled applications, a target control application by at least one of:
sorting the plurality of to-be-controlled applications according to a preset priority, and determining a to-be-controlled application with a highest priority as the target control application;
configuring an application selection control in the steering wheel control (511), wherein the application selection control is configured to select the target control application from the plurality of to-be-controlled applications; or
triggering, in a case where there are a plurality of steering wheel controls (511), an application selection function by operating at least two steering wheel controls (511) simultaneously, and determining, after triggering the application selection function, the target control application by selecting from the plurality of to-be-controlled applications through adjusting the steering wheel controls (511).

15. The apparatus according to any one of claims 10 to 13, wherein
the steering wheel control (511) comprises at least one of a mechanical button, a slider, a scroll wheel, or a toggle switch; and
the control signal of the steering wheel control (511) comprises a control signal generated in response to determining that the steering wheel control (511) is operated.
